# EUROPEAN PATENT APPLICATION

(11) **EP 0 919 458 A1**
(43) Date of publication of application: **02.06.1999**
(21) Application number: 97309422.0
(22) Date of filing: 21.11.1997
(51) Int. Cl.: B63B 35/04, F16L 1/20

(54) **Loading and laying underwater cable**

(71) Applicant: CABLE & WIRELESS PLC, London WC1X 8RX (GB)
(72) Inventor: Featherstone, Jeremy John Richard, Chelmsford, Essex CM1 3DZ (GB)
(74) Representative: Skone James, Robert Edmund

(57) **Abstract**

A method of loading underwater cable onto a vessel (9). The method comprises
(a) providing a coil of cable (3,4) in one or more cable transfer vessels (1); and
(b)floating the transfer vessel(s) onboard the vessel (9).

In one example step (b) comprises
floating the cable transfer vessel(s) onboard an intermediate vessel (8);
transporting the intermediate vessel (8) to the cable-laying vessel (9);
floating the cable transfer vessel(s) (1,2) off the intermediate vessel; and
floating the cable transfer vessel(s) onboard the cable-laying vessel (9).

## Description

The present invention relates to improvements in loading and laying underwater cable.

There are two conventional methods of loading underwater cable onto a vessel. If the cable is sufficiently light then it can be pre-wound onto a reel or carousel/pan assembly which is lifted onto the vessel. However this method is not possible for trans-oceanic cable where 4000-5000 tonnes of cable may need to be loaded into three or four cable tanks. In this case the cable is stored as a coil in a cable tank. The cable is uncoiled from the cable tank by a first cable engine and fed by a second cable engine on the vessel into the vessel's cable tank. As the cable is fed into the vessel's cable tank it is manually guided into a closely packed coil by personnel inside the vessel's cable tank. It can take over a month to load a length of trans-oceanic cable into a tank in this way.

In accordance with a first aspect of the present invention there is provided a method of loading underwater cable onto a vessel, the method comprising
(a) providing a coil of cable in one or more cable transfer vessels; and
(b) floating the transfer vessel(s) onboard the vessel.

The present invention enables the cable to be loaded quickly onto the vessel with little manual intervention.

The cable may be loaded onto the transfer vessel by first attaching the end of the cable to a driven reel or carousel, rotating the reel or carousel to coil the cable onto the reel or carousel; and then loading the reel or carousel onto the transfer vessel. However preferably the method further comprises coiling the cable into the transfer vessel. The cable may be coiled in any desired pattern, for instance a meander pattern. However preferably the cable is coiled in a helix. This ensures that the cable is not bent below its minimum bend radius.

Typically the vessel is partially submerged to enable the transfer vessel to be floated onboard in step (b), and then refloated. However it is possible that the transfer vessel may be floated onboard without previously partially submerging the vessel.

A cable-laying vessel may typically spend a quarter of its time on stand-by, a quarter loading cable into the vessel at a cable factory, a quarter on passage from the cable factory to a cable-laying location, and only a quarter actually laying the cable. As a result, the cable-laying vessel and related personnel are not used to their full potential.

A conventional approach to this problem is to load the cable onto a freighter which transports the cable to the cable-laying vessel. The freighter then unloads the cable into the storage tanks of the cable-laying vessel. Although this minimises transit time for the cable-laying vessel it increases loading time since the cable is loaded twice between the factory and the cable-laying vessel. This is a particular problem when the cable must be coiled into the freighter and into the cable-laying vessel, since each loading operation may take a number of weeks. In addition the cable factory must still store cable on site until loaded onto the freighter. When the factory is busy this can severely constrain the programming of installation projects at the cable factory.

In accordance with a second aspect of the present invention there is provided a method of laying underwater cable comprising
(a) providing a coil of cable in one or more cable transfer vessels;
(b) floating the transfer vessel(s) onboard a cablelaying vessel having a cable deployment system; and
(c) uncoiling and laying the cable from the onboard cable transfer vessel(s) into the water using the cable deployment system.

The present invention utilizes a float-on float-off (flo-flo) cable-laying vessel. The cable-laying vessel can remain at a cable-laying location remote from the cable factory while the cable transfer vessel (eg a hopper barge) is loaded at the cable factory (or other suitable location). This results in greater utilization of the cable-laying vessel. In addition the cable only needs to be loaded once - into the cable transfer vessel(s). This reduces the time required to lay the cable.

The cable is laid "continuously" in the sense that there is generally a continuous cable line between the portion of the cable which is being uncoiled from the transfer vessel and the portion of the cable which is being laid into the water. As a result the cable does not need to be stored in an intermediate storage tank before it can be laid into the water.

The cable may be loaded onto the transfer vessel by first attaching the end of the cable to a driven reel or carousel, rotating the reel or carousel to coil the cable onto the reel or carousel; and then loading the reel or carousel onto the transfer vessel. The cable is then uncoiled from the reel or carousel when the cable is laid (optionally under control of the driven reel/carousel). However preferably the method further comprises coiling the cable into the cable transfer vessel. The cable may be coiled in any desired pattern, for instance a meander pattern. However preferably the cable is coiled in a helix. This ensures that the cable is not bent below its minimum bend radius.

Typically the cable-laying vessel is partially submerged to enable the cable transfer vessel(s) to be floated onboard in step (b), and then refloated. However it is possible that the cable transfer vessel(s) may be floated onboard without previously partially submerging the cable-laying vessel.

The cable transfer vessel(s) may be ocean-going vessels which can travel to the cable-laying vessel independently when loaded with cable. However preferably step (b) comprises
floating the cable transfer vessel(s) onboard an intermediate vessel;
transporting the intermediate vessel to the cable-laying vessel;
floating the cable transfer vessel(s) off the intermediate vessel; and
floating the cable transfer vessel(s) onboard the cable-laying vessel.

The use of an intermediate vessel (eg. a conventional float-on float-off freighter) enables cheaper (ie. non-ocean going) cable transfer vessels to be used. In addition, a plurality of cable transfer vessels can be conveniently transported to the cable-laying vessel using a single intermediate vessel. The cable transfer vessels may be ocean-going when empty (or when carrying a light load) to enable them to travel back to port independently.

In accordance with a third aspect of the present invention there is provided a cable-laying vessel comprising
a vessel storage dock which can be flooded to enable one or more cable transfer vessels to be floated into the vessel storage dock; and
a cable deployment system for uncoiling and laying cable from the onboard cable transfer vessel(s) in the vessel storage dock to the water.

The cable deployment system can simply be added to a conventional float-on float-off freighter. As a result, a complete new vessel does not need to be built. Preferably the cable deployment system is removable, enabling it to be used on different vessels.

In a preferred arrangement, the cable transfer vessel(s) are floated into the vessel storage dock underneath the cable deployment system. However a problem with this arrangement is that there must be sufficient clearance between the top of the cable transfer vessel(s) and the bottom of the cable deployment system. Therefore in one arrangement the vessel further comprises means (eg one or more hydraulic lifts) for raising the cable deployment system to enable the cable transfer vessel(s) to be floated into the vessel storage dock underneath the cable deployment system. When the cable storage vessel(s) has/have been loaded into the vessel storage dock, the cable deployment system can then be lowered. The resulting reduced height difference enables the cable to be laid more easily.

In an alternative arrangement the vessel storage dock has an opening which is arranged such that the cable transfer vessel(s) is/are not floated into the vessel storage dock underneath the cable deployment system. For instance the transfer vessels may be loaded through one of the bow, stern, port and starboard of the cable-laying vessel; and the cable may be laid over another different one of the bow, stern, port and starboard of the cable-laying vessel.

In accordance with a fourth aspect of the present invention there is provided a cable transfer vessel comprising one or more cable storage tanks for storing a coil of cable; and a cable core in the or each cable storage tank, wherein the cable transfer vessel has no means of uncoiling the stored coil(s) of cable.

Conventional cable freighters carry a cable engine for uncoiling cable from the freighter's storage tanks and loading it into a cable laying vessel. The fourth aspect of the present invention recognizes that it is not necessary to install a cable engine on a transfer vessel which is floated into a cable vessel.

The cable core may comprises a driven rotating reel or carousel, but preferably the core is non-driven and merely prevents the cable from being coiled below a minimum bend radius.

Typically the vessel has a breadth less than 25 metres to enable the cable transfer vessel to be floated onboard a cable-laying vessel.

Typically the vessel further comprises a frustoconical cable guide for guiding cable which is being uncoiled from the cable storage tank. The vessel may also comprise a repeater storage compartment for storing one or more repeaters. Preferably the vessel further comprises means for cooling repeaters in the repeater storage compartment(s).

The vessel may also comprise one or more cable lines leading from the cable storage tank(s) which can be connected to the cable deployment system of the cable-laying vessel.

The present invention may be utilized for any type of cable (for instance power cable) but is particularly suited to communication cable such as optical fibre cable. The invention is also particularly suited for loading and laying high tonnages (eg. over 1000 tonnes) of cable.

An embodiment of the present invention will now be described with reference to the accompanying Figures, in which:

Figures 1 to 4 illustrate a method of laying underwater cable in which:
Figure 1 shows a barge loading cable;
Figure 2 shows a float-on float-off freighting vessel carrying two barges;
Figure 3 illustrates the freighting vessel unloading the two barges;
Figure 4 illustrates a cable-laying vessel uncoiling and laying cable from the two loaded barges;
Figure 5 is a detailed cross-sectional side view of the barge shown in Figure 1;
Figure 6 is a plan view of the barge;
Figure 7 is a detailed cross-sectional side view of the vessel of Figure 4 loaded with two barges; and
Figure 8 is a plan view of the stern of the vessel shown in Figure 7.

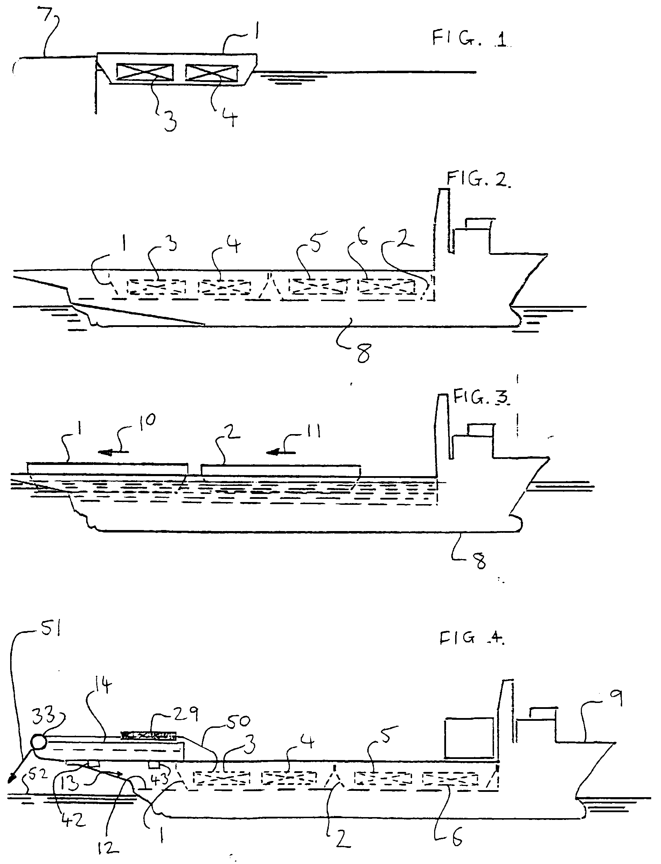

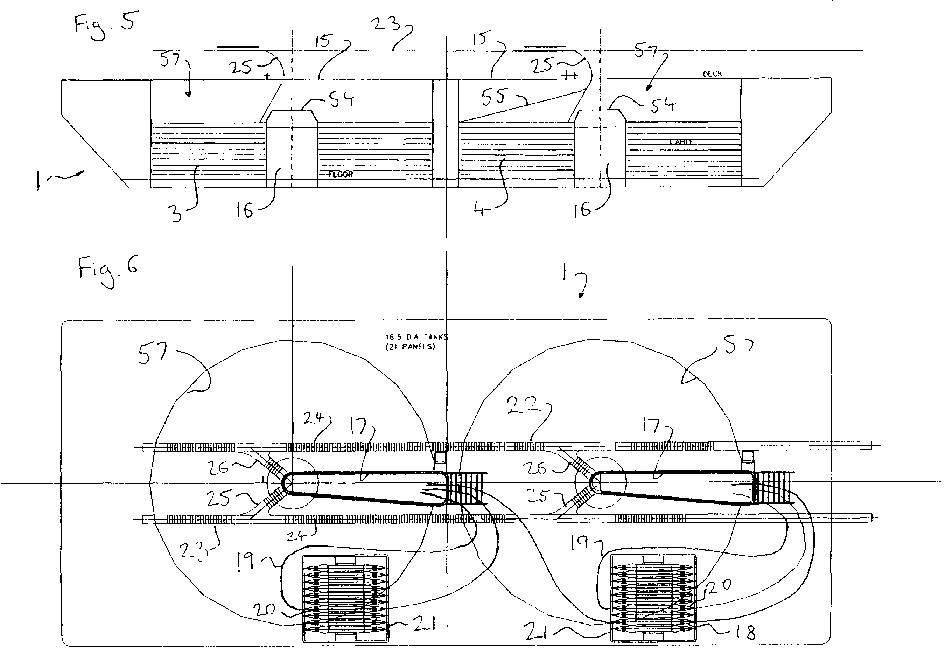

Referring to Figures 1-4, a pair of 45m*20m transfer barges 1,2 are loaded at a cable factory dock 7 by coiling trans-oceanic optical fibre cable into the barges. The total weight of the four coils 3-6 is typically 4000-5000 tonnes. The time taken to manually coil the cable into the barges will typically be 4-7 weeks. A float-on float-off freighter 8 is moored at a distance from the dock 7 (the depth alongside the dock 7 being insufficient to allow the freighter 8 to moor alongside the dock 7). Since the freighter 8 is not moored alongside the dock 7, no port dues will be payable.

The barges 1,2 (which have no drive engines) are towed out to the freighter 8 by tugs (not shown). The freighter 8 is partially submerged by flooding a number of ballast tanks (not shown) and the barges 1,2 are then floated into the partially submerged freighter 8 by the tugs. After the barges 1,2 have been loaded, the freighter 8 is refloated to the position shown in Figure 2, and transports the barges to a float-on float-off cable-laying vessel 9 (Figure 4) located at a remote cable-laying location.

The cable-laying vessel 9 is 100-120m long, and has a number of ballast tanks (not shown) and a barge storage dock 12 extending along the majority of the length of the vessel. The storage dock 12 has an opening 13 with a door (not shown) at the stern of the vessel 9. A cable working deck 14 is located at the stern of the vessel 9 above the storage dock opening 13, and supports a cable deployment system including a linear cable engine 29 and rear sheave 33. The cable working deck 14 is mounted on a set of four hydraulic lifts 42-45. The cable-laying vessel also has a winch (not shown) and may also carry a tug.

When the transfer vessel 8 reaches the cable-laying vessel 9, the vessels 8,9 are both partially submerged by filling their ballast tanks (not shown) with water. The door to the storage dock 12 is opened to flood the storage dock and the hydraulic lifts 42-46 are operated to lift the cable working deck. This enables the barges 1,2 to be floated through the opening 13 below the raised cable working deck 14 into the storage dock 12, using the tug and/or winch. When the barges 1,2 have been loaded into the storage dock 12, the cable working deck 14 is lowered to its operating position and the vessel 9 is refloated by pumping out its ballast tanks. The vessel 9 is then ready to uncoil and lay the cable 3-6 stored on the barges 1,2 using the cable engine 29, as shown in Figure 4. As can be seen in Figure 4, there is a continuous cable line between the portion 50 of the cable which is being uncoiled from the coil 3 by the linear cable engine 29 and the portion 51 of the cable which is being laid into the water 52 over the rear sheave 33.

Referring to Figures 5 and 6, each barge 1,2 has two 16.5m diameter cable storage tanks 57, each storage tank having a deck 15, and a fixed cylindrical core 16 which ensures the cable is not coiled below its minimum bend radius. The coils of cable 3,4 are arranged as a stack of helical coils around the core 16. The cores 16 each have a frusto-conical cable guide 54 portion. Referring to Figure 6, the deck 15 has a pair of slots 17 which provide access to the coils of cable 3,4. Due to the length of the coils, a number of repeaters are required to boost the signal in the optical fibre. Therefore each barge 1,2 comprises a pair of water-cooled repeater compartments 21 which carry a stack of cooled repeaters. Where a repeater is required, the cable is bighted-off through the slot 17 and connected to a repeater in the repeater stack 18. A number of repeaters may be required but for clarity in Figure 6 a single bight 19 is shown attached to one of the repeaters 20. The ends of the coils 3,4 are also connected at a repeater 18.

Cable from the barges is unloaded via a starboard cable line 22 or a port cable line 23. The cable lines 22,23 each comprise a number of sets of rollers 24. Alternatively, the cable lines 22,23 may comprise stainless steel troughs without rollers. The cable is guided from the tanks onto the cable lines 22,23 by port and starboard cable guides 25,26 (conventionally known as "round-downs") which branch off from the cable lines 22,23 into the central end of the slot 17. Referring to Figure 5, as the cable uncoils from the barge it changes from a maximum bend angle where an outer turn of the coil is unwinding (as indicated at 55) to a minimum bend angle where an inner turn of the coil is unwinding.

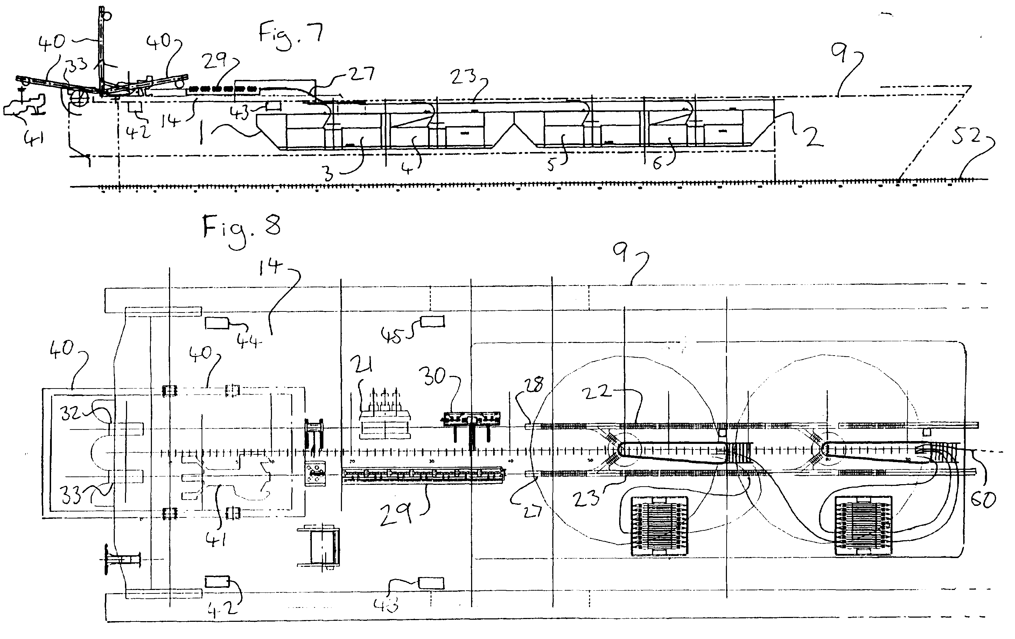

Referring to Figures 7 and 8, when the barges have been loaded onto the cable-laying vessel 9, the cable lines on the stern barge 1 are each pivoted up at 27,28 onto the cable working deck 14 and connected to a respective cable engine. The port cable line 23 is connected to a linear cable engine 29 which comprises a number of sets of pairs of driven wheels with rubber tires. The starboard cable line 22 is connected to an alternative drive system comprising a draw-off haul back machine 30 which provides back tension, and driven drum 21 which carries two or three turns of cable. The cable engines control the payout of the cable to respective stern sheaves 32,33.

A cable-laying barge (not shown) with a cable engine is loaded into the stern of the storage dock 12 under the cable working deck 14. The cable-laying barge carries sufficient cable to lay from the shore to the minimum draft of the cable-laying vessel 9. This removes the need for a separate shore-end cable-laying barge mobilization. At the beginning of a cable-laying operation the cable-laying barge lays a line of cable from the shore to the cablelaying ship. The end of the first coil 3 is jointed to the end of the cable which has been laid and fed into the cable engine 29. As the cable-laying vessel moves along a desired route, the cable engine 29 pulls the cable from the first coil and feeds it to the rear sheave 33. As the vessel enters deeper water the weight of the cable in the water provides enough force to pull the cable from the barges 1,2, and the cable engine then performs a control/braking function.

The end 60 of the coil 4 is attached to the end (not shown) of the stern coil 5 in the barge 2 when the barges have been loaded onto the vessel 9. As a result all cable onboard the vessel can be tested simultaneously and laid in a single uninterrupted laying operation. If necessary each tank 57 may carry a plurality of separate coils which are each connected to a coil in another tank 57 and/or another barge so that as the cable is laid, the weight of cable remains uniformly distributed along the length of the vessel 9.

An A-frame 40 is also provided on the cable working deck 14. The A-frame is shown in Figure 5 in three positions. The A-frame is used to load a plough 41 into the water.

Empty barges returning from the cable-laying vessel 9 to the cable factory could potentially carry other goods.

## Claims

1. A method of loading underwater cable onto a vessel, the method comprising
(a) providing a coil of cable in one or more cable transfer vessels; and
(b) floating the transfer vessel(s) onboard the vessel.

2. A method according to claim 1 further comprising coiling the cable into the cable transfer vessel.

3. A method of laying underwater cable comprising loading the cable onto a cable-laying ship having a cable deployment system by a method according to claim 1 or 2; and uncoiling and laying the cable from the onboard cable transfer vessel(s) into the water using the cable deployment system.

4. A method according to claim 3 wherein step (b) comprises
floating the cable transfer vessel(s) onboard an intermediate vessel;
transporting the intermediate vessel to the cable-laying vessel;
floating the cable transfer vessel(s) off the intermediate vessel; and
floating the cable transfer vessel(s) onboard the cable-laying vessel.

5. A method according to claim 3 or 4 further comprising raising the cable deployment system to enable the cable transfer vessel(s) to be floated into the cable-laying vessel underneath the cable deployment system.

6. A cable-laying vessel comprising
a vessel storage dock which can be flooded to enable one or more cable transfer vessels to be floated into the vessel storage dock; and
a cable deployment system for uncoiling the cable from the onboard cable transfer vessel(s) in the vessel storage dock and laying the cable into the water.

7. A vessel according to claim 6 wherein the vessel storage dock has an opening which is arranged such that the cable transfer vessel(s) is/are not floated into the vessel storage dock under the cable deployment system.

8. A cable transfer vessel comprising one or more cable storage tanks for storing a coil of cable; and a cable core in the or each cable storage tank, wherein the cable transfer vessel has no means of uncoiling the coil of stored cable from the cable storage tank(s).

9. A vessel according to claim 8, wherein the vessel has a breadth less than 25 metres to enable the cable transfer vessel to be floated onboard a cable-laying vessel.

10. A vessel according to claim 8 or 9 further comprising one or more lengths of cable coiled round the core in the or one of the cable storage tanks.
